**Europäisches Patentamt**

**European Patent Office**

**Office européen des brevets**

(19)

(11) Publication number: **0 186 328**
**A2**

# (12) EUROPEAN PATENT APPLICATION

(21) Application number: **85308663.5**

(22) Date of filing: **28.11.85**

(51) Int. Cl.⁴: **G 01 V 1/40**
**E 21 B 47/00**

(30) Priority: **10.12.84 US 679667**

(43) Date of publication of application:
**02.07.86 Bulletin 86/27**

(84) Designated Contracting States:
**DE FR GB IT NL**

(71) Applicant: **HALLIBURTON COMPANY**
**P.O. Drawer 1431**
**Duncan Oklahoma 73536(US)**

(72) Inventor: **Zimmer, Mark D.**
**21207 Park Royal Drive**
**Katy Texas 77449(US)**

(74) Representative: **Wain, Christopher Paul et al,**
**A.A. THORNTON & CO. Northumberland House 303-306**
**High Holborn**
**London WC1V 7LE(GB)**

(54) **Signal processing apparatus for use in well borehole.**

(57) In an acoustic bond logging tool, top and bottom transmitters (30, 36) are provided with a pair of spaced receivers (32, 34) therebetween. A multiplexer (50) including an output to a high speed analog to digital converter (52) is time multiplexed to digitize both receiver output signals obtained from the same transmitted pulse. By damping the transmitted pulse to provide first or second peaks in the transmitted burst and gating the receiver signals through multiplexing, the corresponding received peaks can be located and amplified. With a stepped digit gain control, the analog to digital converter (52) can be operated with greater resolution and improved accuracy whereby large, non clipped signal peaks are provided for digitization, thereby indicating attenuation of the transmitted signal, thereby indicating quality of the acoustic bond.

EP 0 186 328 A2

./...

FIG.1

- 1 -

## SIGNAL PROCESSING APPARATUS FOR USE
## IN WELL BOREHOLE

This invention relates to a signal processing apparatus for use in a well borehole.

At an oil well, cement is normally placed on the exterior of the casing; a faulty cement bond is undesirable. The bond quality is tested by transmitting an acoustic pulse along the casing for the purpose for determining bond quality. Bonding is indicated by variations in acoustic attenuation. Acoustic receivers are used which are unusually spaced rather closely so that the received signal of the two acoustic receivers is indicative of bond quality in a relatively narrow gap. For instance, the receivers might be as close as one foot (0.3m) yielding data resolution in one foot (0.3m) increments. Moreover, the data which are received are closely spaced in time. Becuase the receivers are positioned close to one another, the onset of data at the respective two receivers is much closer. By means of pulse shaping at the transmitter whereby the transmitted pulse is narrowed to just a few oscillations, ideally one large positive excursion and a large negative excursion, the received signals are shaped so that the corresponding first and second peaks can be located and delineated.

The apparatus of the present invention is designed to assist in high speed multiplexing of the two received signals which trail closely one after the other. In one arrangement, the signals are digitized with assistance of a gain control circuit, thereby enabling the signals to be peak amplitude measured (the first or second peaks as selected). This enables the data to be obtained with a high degree of accuracy whereby the attenuation can be more readily calculated with a higher degree of accuracy. This avoids clipping of signal peaks in the A-to-D converter, provides higher resolution, improved accuracy, and more useful data.

According to the present invention, there is provided a signal processing apparatus for use in a well borehole to obtain two received signals from spaced acoustic receivers supported on an acoustic bond logging sonde in response to an acoustic pulse from an acoustic transmitter carried by the sonde, the signal processing apparatus comprising:

(a) multiplexing means having two inputs connected to the two spaced acoustic receivers to form a time multiplexed signal;

(b) digital converter means connected to said multiplexing means for forming digitized words from received acoustic pulses at said receivers; and

(c) means locating selected peaks in the two received signals wherein said peak values are supplied to said digital converter means to form digital words encoding acoustic attenuation of the transmitted acoustic pulse travelling along a casing.

In general terms, the present invention provides an acoustic bond logging tool having widely spaced transmitters and closely spaced receivers therebetween, a pair of receivers being connected to a multiplexer and then to an A-to-D converter. This system output signal is obtained by passage of the acoustic wave travelling through the casing. The attenuation of the acoustic signal is thus determined by the digitized values of the received signals from the two receivers.

An embodiment of the invention will now be more particularly described by way of example and with reference to the accompanying drawings, in which:

FIGURE 1 depicts schematically an acoustic bond logging tool in a case bore hole and further illustrates in schematic block form the circuitry thereof for providing a signal fired digitization of the peak casing amplitude observed at two receivers; and

FIGURE 2 shows a sequence of observed signals illustrating a transmitted pulse and two received pulses which are digitized by the present invention.

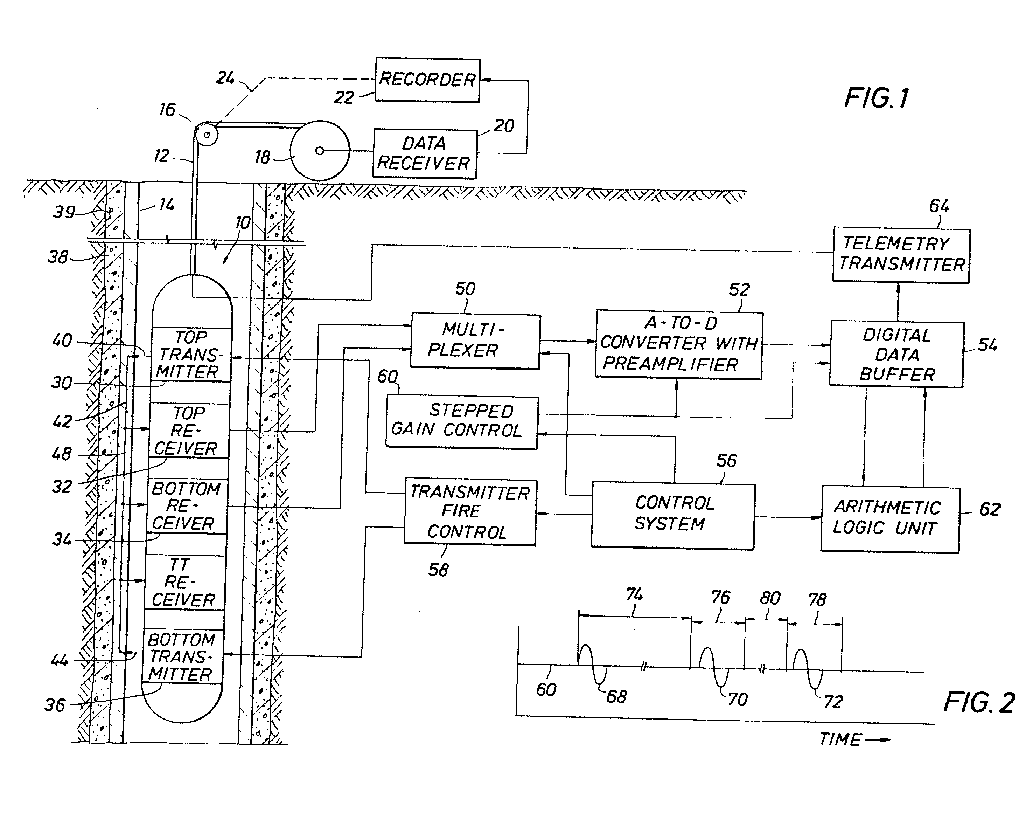

Attention is first directed to Figure 1 of the drawings where an acoustic logging device is indicated generally by the numeral 10. It is supported on a cable 12 in a borehole 14 to thereby obtain acoustic logging data. The cable 12 extends upwardly to the surface to pass over a sheave 16. The sheave 16 directs the cable to a reel 18 which spools and stores several thousand feet (1 foot = 0.3m) of the cable 12. The cable 12 is connected to a data receiver 20. The data receiver receives the acoustic logging data and transfers them to a recorder 22. The recorder 22 is connected by a mechanical or electronic means 24 to the sheave for the purpose of determining the depth of the sonde 10 in the borehole 14. This enables the data to be correlated to the depth in the well. In typical operations, the sonde 10 is lowered to the bottom of the well and then is retrieved from the well by spooling the cable onto the reel 18. As the sonde is raised in the well, acoustic pulses are transmitted in a controlled sequence. Data are obtained and recorded by the recorder 22 as a function of depth of the sonde 10 in the borehole.

In the sonde 10, there is a surrounding pressure housing which encloses certain transmitters and receivers.

0186328

- 4 -

There is a top transmitter 30, a top receiver 32, a bottom receiver 34, and a bottom transmitter 36. They operate piezoelectric crystals to transmit or receive pulses. The pulses travel through the well fluid into the casing 14. The casing is held in position by surrounding cement 38 which joins the casing to the open borehole 39. The cement bonds the casing 14 in place. The quality of the bond is determined by the acoustic attenuation of acoustic pulses travelling along the casing 14.

In Fig. 1, certain idealized propagation paths are illustrated. It is understood that the acoustic paths are represented graphically by the idealization shown in Fig. 1. Thus, the top transmitter directs acoustic energy out along a radial path 40. The acoustic energy turns and travels in the casing wall at 42 and is propagated downwardly. In like fashion, the bottom transmitter has an idealized radially outwardly path at 44, and the acoustic energy travels upwardly along the path 42. The two receivers are located so that they define a segment of the idealized propagation path 42. This segment is identified by the numeral 48. That is, the propagation path 48 has a length determined by the radially inwardly directed propagation paths to the two receivers. Generally, if the receivers are about one foot apart, the propagation path segment 48 is also one foot in length. This is particularly desirable because it enables the device to measure the attenuation in a span of one foot. The one foot segment identified at 48 is thus a portion of the larger segment 42. The longer segment is defined by the two transmitters; the shorter segment 48 is defined between the two receivers.

With a goal of determining the quality of the bond between the casing and the cement on the exterior, and particularly determining this bond quality in the span at 48, the present apparatus transmits pulses alternating from the two transmitters along the propagation path 42. The two receivers provide output signals in a manner to be described.

The circuitry enclosed in the sonde is illustrated in Fig. 1. The receivers 32 and 34 connect to a multiplexer 50. The multiplexer 50 in turn connects the serially selected signals to an analog to digital converter 52. That provides output data in the form of digital words to a digital data buffer 54. The system operates under authority of a control system 56 that provides timed control signals. For instance, one signal is input to a transmitter fire control circuit 58. The fire control circuit 58 provides timed fire control signals for the two transmitters. The control system also provides a timed signal for a stepped gain control 60. This provides a change in scale for the analog to digital converter 52. The change in scale causes the converter 52 to operate in a more linear portion of its range so that the minimum bit measure becomes relatively small, thereby reducing error in digitization. The control system also operates an arithmetic logic unit 62. It receives selected stored words from the buffer 54 and performs relatively simple arithmetic operations with the stored words. The arithmetic output is then input back to the buffer 54 and is stored. The buffer is periodically interrogated by a telemetry transmitter 64 which provides an output signal along the conductor connecting with the logging cable 12 which data is output to the surface.

Attention is momentarily directed to Fig. 2 of the drawings for discussion of timing of the operation of this apparatus. Fig. 2 shows a graph of pulses as a function of time. Directing attention to the base line 66, it will be observed that there is a transmitted pulse 68. The transmitted pulse is shown to have a positive peak and then a negative peak. In actuality, there may be slight ringing after transmission of a pulse. In any case, the ringing is normally damped by the acoustic transducer such that the illustrated first and second peaks are provided, and subsequent or trailing peaks are sufficiently small that they pose no particular problem. The transmitter is thus first operated to form the transmitted pulse. Assume for the moment that the pulse is transmitted by the top transmitter 30 and is propagated in the casing 14 along the idealized ray or propagation path 42. As this pulse passes the top receiver 32, it is observed. The top receiver forms an output signal. This is identified by the pulse wave form at 70 in Fig. 2. The bottom receiver subsequently forms an output signal which is represented at 72 in Fig. 2 of the drawings.

The control system 56 is preset so that, after firing of the transmitter where by the pulse 68 is first formed, a certain time elapses. This time is represented by the time frame 74 shown in Fig. 2. The multiplexer 50 is then switched on to receive the pulse 70. The time span 74 is controlled. That is, its duration is fairly well determined by the spacing of the equipment in the sonde 10 and the velocity of propagation in the casing 14. Also, a known variable is the velocity of acoustic propagation through the well fluid. These variables are reasonably fixed and hence, the time span 74 is fairly well known. Under control of the multiplexer 50, the signal from the top receiver 32 is thus transferred from the top receiver 32 through the multiplexer 50 to the converter 52. This transfer occurs in the time interval identified at 76. The propagation segment 48 has a fixed length. Thus, travel of the signal from the top receiver to the bottom receiver requires about 57 microseconds per linear foot of casing. If the two receivers are one foot apart, then the onset of the second pulse 72 shown in Fig. 2 is about 57 microseconds after the onset of the first pulse 70. To this end, the multiplexer is switch on for a time window represented graphically at 78, and the interval 78 and 80 are separated by an interval 80 where no meaningful data can be obtained. Thus, the pulses are 70 and 72 are permitted to pass through the multiplexer and be digitized. The timing sequence indicated for the pulses 70 and 72 fairly well follows the representation shown in Fig. 2 of the drawings.

Assume that the bottom transmitter 36 is operated. If it has spacing from the bottom receiver 34 which is equal to the spacing of the top transmitter 30, then the relative sequence of events shown in Fig. 2 will prevail for a pulse transmitted from the bottom toward the top. In this structure, both top and bottom transmitters are thus operated alternately. To the degree that there might be non linear aberrations in the system, the attenuation is determined by alternate tests. First the top and then the bottom transmitter are operated; for this reason, the transmitter fire control circuit 58 operates the two alternately so that both attenuation values (travelling upwardly and downwardly) are obtained. This assists in removing errors in the data.

The stepped gain control 60 should be noted. Assume that the top and bottom receivers are about one foot apart. Typically, the attenuation is about one dB. On the other hand, with a perfect cement bond the attenuation can be as high as perhaps 20 dB. The stepped gain control 60 provides a gain control to the converter 52 so that the second peak is brought more or less to a comparable amplitude in the A-to-D converter. Consider as a possibility the minimum bit in the converter 52 represents a value of one millivolt. Assume further that full scale value is five volts. The stepped gain control is switched in the interval 80 to bring the second pulse 72 up scale whereby a significant signal is observed at the converter 52. This makes the signal sufficiently large that minimum bit jitter is no problem. For instance, imagine that the first pulse has a peak amplitude in the range of 3 to 4 volts. The gain control is operated so that the second pulse 72 is typically at least one volt or so. Absent the stepped gain control 60, the second pulse might be 20 dB down in amplitude and susceptible to minimum bit jitter in the digitization.

The stepped gain control thus forms a gain value which is part of the digital word representative of peak amplitude. To this end, it forms a gain control signal which is input to the digital data buffer 54 for storage along with the digitized value. This enables relatively large signal peaks to be provided to the converter 52 without clipping those peaks in the multiplexer or the preamp inputting the signals to the converter 52.

As will be observed, a single fire system is set forth. Thus, when one transmitter is fired, both receivers provide data which data is multiplexed, converted into digital form, subsequently temporarily stored, used to calculate attenuation output to the surface. The telemetry system thus delivers the raw data (as desired) and is also able to deliver the ratio of amplitudes as a measure of attenuation. This is obtained with transmitted pulses propagating in both directions along the casing.

The sonde includes a third receiver labelled TT receiver. It is similar in construction to the other two but it is spaced differently. As an example, it might be two feet from the bottom transmitter 36 compared to spacing of three and four feet for the other two receivers. Thus, its received signal is 57 microseconds from the signal of the receiver 34.

The TT receiver is used for MSG, and its signal is also multiplexed in time with the other signal receivers to improve downhole travel time measurement resolution. Travel time is thus measured between the transmitter 36 and the TT receiver; this data is useful in later analysis of the log.

0186328

CLAIMS:

1.       A signal processing apparatus for use in a well borehole to obtain two received signals from spaced acoustic receivers (32,34) supported on an acoustic bond logging sonde in response to an acoustic pulse from an acoustic transmitter carried by the sonde, the signal processing apparatus comprising:

(a)  multiplexing means (50) having two inputs connected to the two spaced acoustic receivers to form a time multiplexed signal;

(b)  digital converter means (52) connected to said multiplexing means for forming digitized words from received acoustic pulses at said receivers;   and

(c)  means (60) locating selected peaks in the two received signals wherein said peak values are supplied to said digital converter means to form digital words encoding acoustic attenuation of the transmitted acoustic pulse travelling along a casing.

2.       Apparatus according to claim 1, including a telemetry transmitter (64) connected to a digital data buffer means (54) for transmitting data from said buffer means, said transmitter being connected to a cable (12) extending from the sonde to data receiving equipment (20) at the end of the cable at the surface.

3.       Apparatus according to claim 1 or 2, wherein the acoustic receivers (32,34) are spaced along the sonde one from another by a fixed distance and there are two acoustic transmitters (30,36) on the sonde spaced further apart than are said receivers.

4.       Apparatus according to claim 3, wherein the acoustic transmitters (30,36) are located evenly and equally beyond said receivers.

5.      Apparatus according to any preceding claim, including control means (56) timing operation of said multiplexing means (50) to form digital words of the peak signals from said acoustic receivers, preferably by limiting the duration of digitizing of the signal from said acoustic receivers (32,34).

6.      Apparatus according to claim 5, including means directing digital words from said digital converter means (52) into digital data buffer means (54).

7.      Apparatus according to any preceding claim, wherein a third receiver is located along the sonde to form an output signal after an acoustic pulse, said third receiver signal in conjunction with the transmitted pulse providing data indicative of acoustic pulse travel time.

8.      A method of determining acoustic attenuation in a casing in a well borehole with an acoustic transmitter on a sonde and spaced acoustic receivers (32,34) on the sonde to observe received acoustic signals comprising the steps of:
(a)   listening for acoustic signals at two spaced acoustic receivers (32,34) and forming analog signals thereof;
(b)   multiplexing the received analog signals;
(c)   converting the multiplexer analog signals into a series of digital words encoding the analog values thereof;
(d)   timing the prior step of converting so that only selected received peak signals are converted into words; and
(e)   determining the attenuation from the selected peak signals after converting wherein the peak received signals yield attenuation.

9.      A method according to claim 8, wherein the step of multiplexing includes sequential selecting of the near and then the far received signals at said receivers.

10.    A method according to claim 8, further comprising the steps of obtaining a starting time from an acoustic transmitter pulse, multiplexing received signals for intervals beginning with the transmitter pulse until specified intervals elapse after the starting time and forming digital words for a specified time interval for the received acoustic signals.

FIG.1

FIG.2

1/1

0186328